# EUROPEAN PATENT APPLICATION

(11) **EP 2 503 770 A1**
(43) Date of publication of application: **26.09.2012**
(21) Application number: 11163960.5
(22) Date of filing: 27.04.2011
(51) Int. Cl.: H04N 1/00, B65H 5/06

(54) **Transmission device for scanner**

(30) Priority: 24.03.2011 CN 201120080135 U
(71) Applicant: Mustek Systems Inc., Hsin-Chu (TW)
(72) Inventor: Wang, Ping-Chih, Hsin-Chu (TW)
(74) Representative: Watterson, Peer Marten John

(57) **Abstract**

A transmission device for a scanner includes a driving member (10), two worms (20), two rollers (30), and two worm wheels (40). The driving member (10) is disposed on a housing base (100), and includes a main body (11) and an output shaft (12). The output shaft (12) has two ends (121, 122) disposed respectively at two opposite sides of the main body (11). The worms (20) are connected respectively and fixedly to the two ends (121, 122) of the output shaft (12). The rollers (30) are disposed rotatably on the housing base (100). The worm wheels (40) are connected respectively and fixedly to the rollers (30), and mesh respectively with the worms (20).

## Description

This invention relates to an office machine, and more particularly to a transmission device for a scanner.

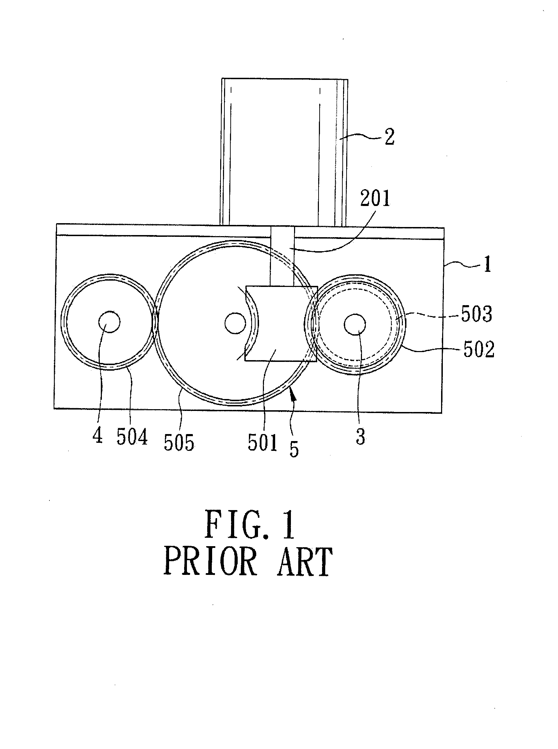

Referring to Fig. 1, a conventional transmission device for a scanner includes a driving member 2, a first roller 3, a second roller 4, and a transmission wheel unit 5. All of the driving member 2, the first roller 3, and the second roller 4 are mounted on a housing base 1 of the scanner. The driving member 2 includes an output shaft 201. The transmission wheel unit 5 includes a worm 501 disposed fixedly on the output shaft 201, a driving gear 502 connected fixedly to the first roller 3 and meshing with the worm 501, a first driven gear 503 connected fixedly to the first roller 3, a second driven gear 504 connected fixedly to the second roller 4, and an idle wheel 505 disposed rotatably on the housing base 1 and meshing with the first and second driven gears 503, 504. When the driving member 2 is started, the worm 501 drives rotation of the driving gear 502 and, thus, the first roller 3, which is transferred to the second roller 4 by the first gear 503 and the idle wheel 505.

Although such a transmission device can achieve its intended purposes, position of the driving member 2 relative to the transmission wheel unit 5 results in a substantial increase in the total volume of the scanner and difficulties during transporting the scanner. Furthermore, power is transmitted from the driving member 2 to the second roller 4 via a relatively long transmission line including the worm 501, the driving gear 502, the first gear 503, and the idle wheel 505, which leads to an increase in the number of the components of the transmission device and a reduction in the transmission efficiency.

The object of this invention is to provide a transmission device for a scanner, which is reduced in the number of the components and the total volume of the transmission device, which is convenient to transport, and which has high transmission efficiency.

Accordingly, a transmission device of this invention is used in a scanner, and includes a driving member, two worms, two rollers, and two worm wheels. The driving member is disposed on a housing base, and includes a main body and an output shaft. The output shaft has two ends disposed respectively at two opposite sides of the main body. The worms are connected respectively and fixedly to the two ends of the output shaft. The rollers are disposed rotatably on the housing base. The worm wheels are connected respectively and fixedly to the rollers, and mesh respectively with the worms.

Since the driving member is disposed between the worm wheels, the total volume of the transmission device is reduced significantly, thereby resulting in convenience during transportation and storage of the scanner. Furthermore, the number of the components of the transmission device is relatively small, and the power transmission path is short, so that the transmission efficiency is increased.

These and other features and advantages of this invention will become apparent in the following detailed description of a preferred embodiment of this invention, with reference to the accompanying drawings, in which:
Fig. 1 is a schematic view of a conventional transmission device for a scanner;
Fig. 2 is a perspective view of the preferred embodiment of a transmission device for a scanner according to this invention;
Fig. 3 is a side view of the preferred embodiment; and
Fig. 4 is a front view of the preferred embodiment.

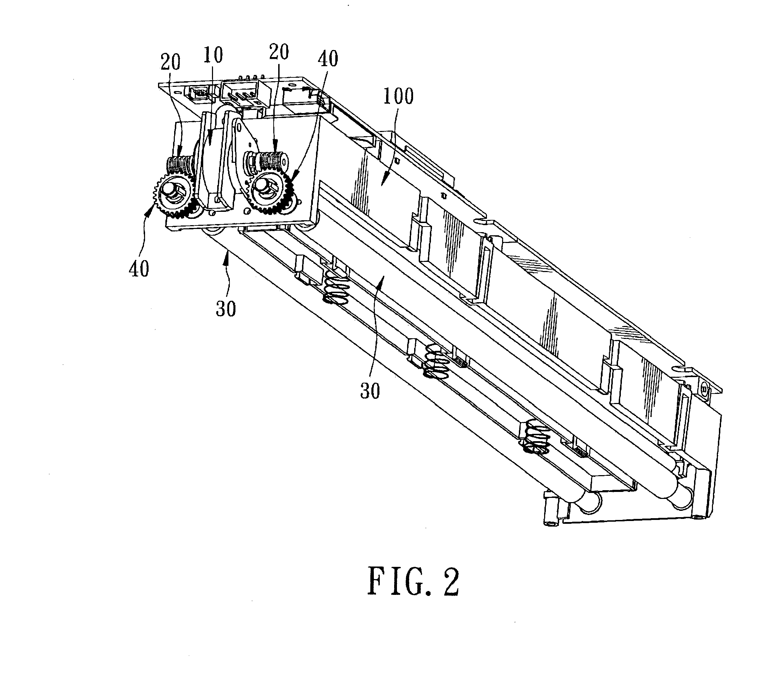

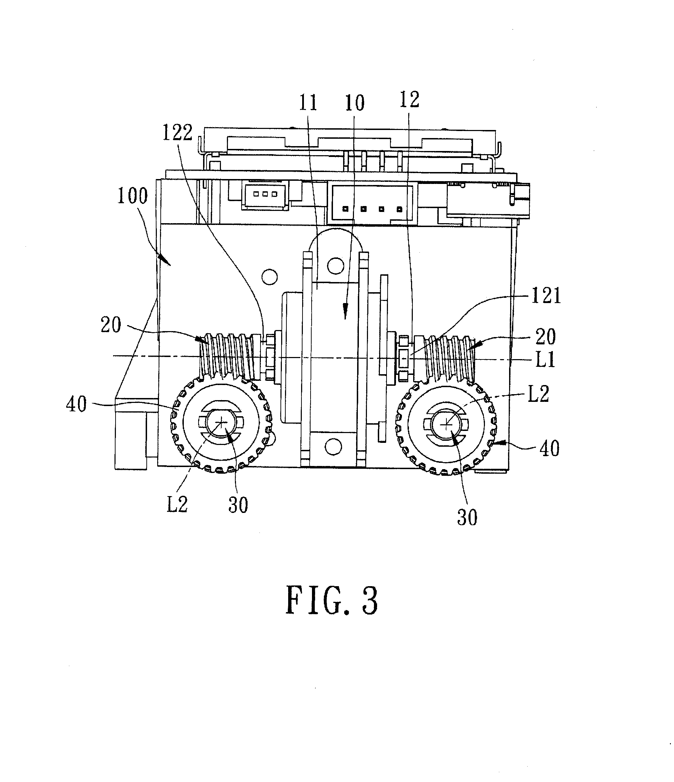

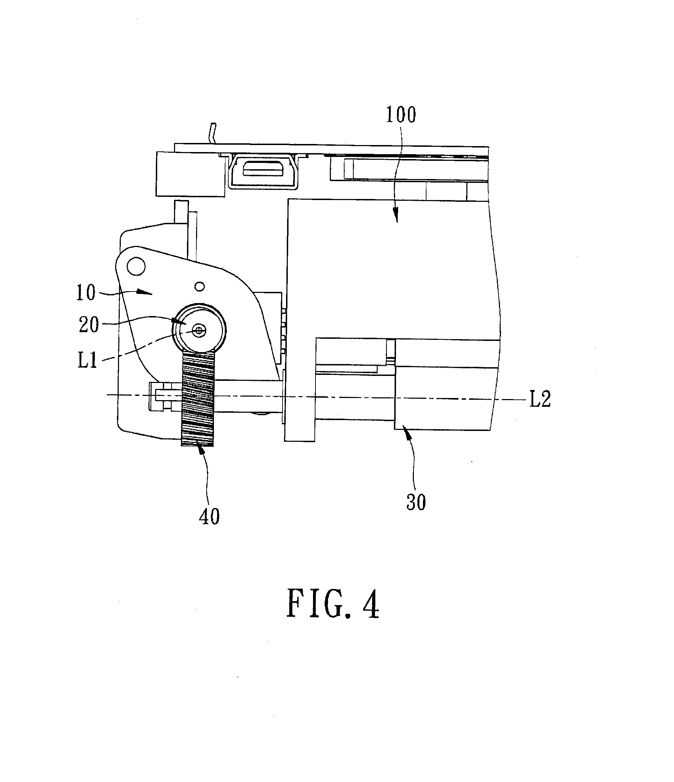

Referring to Figs. 2, 3, and 4, the preferred embodiment of a transmission device for a scanner according to this invention includes a driving member 10, two worms 20, two rollers 30, and two worm wheels 40.

The driving member 10 is configured as a servomotor, and includes a main body 11 disposed on a housing base 100 of the scanner, and an output shaft 12 extending through the main body 11 and having a central axis (L1), and two ends 121, 122 disposed respectively at two opposite sides of the main body 11. The output shaft 12 is rotatable relative to the housing base 100 about the central axis (L1) thereof.

The worms 20 are connected respectively and fixedly to the two ends 121, 122 of the output shaft 12, and are located respectively to two sides of the main body 11.

Each of the rollers 30 has a central axis (L2) perpendicular to the central axis (L1) of the output shaft 12, and is rotatable relative to the housing base 100 about the central axis (L2) thereof.

The worm wheels 40 are connected respectively and fixedly to the rollers 30, and mesh respectively with the worms 20. Preferably, the worm wheels 40 are located at the same side of the output shaft 12.

When the driving member 10 is started to output power from the output shaft 12, the worm wheels 40 are rotated by the worms 20, respectively, for driving rotation of the rollers 30, respectively.

The advantages of the transmission device of this invention can be summarized as follows:
1. Since the main body 11 of the driving member 10 is disposed between the worms 20 and between the worm wheels 40, the total volume of the scanner is reduced significantly so that the scanner is convenient to transport.
2. Power is transmitted from the output shaft 12 of the driving member 10 to the rollers 30 by the worms 20 and the worm wheels 40. As such, the power transmission path is relatively short. Consequently, the transmission efficiency is promoted.
3. The number of the components of the transmission device is relatively small, thereby resulting in a reduction in the manufacturing and assembly costs.

## Claims

1. A transmission device for a scanner, the scanner including a housing base (100), **characterized by**:
a driving member (10) including a main body (11) adapted to be disposed on said housing base (100), and an output shaft (12) extending through said main body (11) and having a central axis (L1), and two ends (121, 122) disposed respectively at two opposite sides of said main body (11), said output shaft (12) being adapted to be rotatable relative to the housing base (100) about said central axis (L1) thereof;
two worms (20) connected respectively and fixedly to said two ends (121, 122) of said output shaft (12);
two rollers (30), each of which has a central axis (L2) perpendicular to said central axis (L1) of said output shaft (12) of said driving member (10), and is adapted to be rotatable relative to the housing base (100) about said central axis (L2) of a corresponding one of said rollers (30); and
two worm wheels (40) connected respectively and fixedly to said rollers (30) and meshing respectively with said worms (20).

2. The transmission device as claimed in Claim 1, **characterized in that** said driving member (10) is configured as a servomotor.

3. The transmission device as claimed in Claim 1, **characterized in that** said worm wheels (40) are located at the same side of said output shaft (12).
